**Europäisches Patentamt**

**European Patent Office**

**Office européen des brevets**

(19)

(11) Veröffentlichungsnummer : **0 365 516 B1**

## (12) EUROPÄISCHE PATENTSCHRIFT

(45) Veröffentlichungstag der Patentschrift :
**11.11.92 Patentblatt 92/46**

(51) Int. Cl.$^5$ : **B60G 3/20, B60G 11/27**

(21) Anmeldenummer : **89890269.7**

(22) Anmeldetag : **16.10.89**

(54) **Radführung für lenkbare und antriebsfähige Räder von Kraftfahrzeugen.**

(30) Priorität : **17.10.88 AT 2562/88**

(43) Veröffentlichungstag der Anmeldung :
**25.04.90 Patentblatt 90/17**

(45) Bekanntmachung des Hinweises auf die
Patenterteilung :
**11.11.92 Patentblatt 92/46**

(84) Benannte Vertragsstaaten :
**DE FR IT NL**

(56) Entgegenhaltungen :
**EP-A- 0 279 135**
**DE-B- 1 078 885**

(56) Entgegenhaltungen :
**PATENT ABSTRACTS OF JAPAN vol. 11, no.**
**339 (M-639)(2786) 06 November 87, & JP-A-62**
**120209 (MAZDA) 01 Juni 87,**
**PATENT ABSTRACTS OF JAPAN vol. 9, no.**
**215 (M-409)(1938) 03 September 85, & JP-A-60**
**76408 (MAZDA) 30 April 85,**

(73) Patentinhaber : **ÖSTERR. AUTOMOBILFABRIK**
**ÖAF-GRÄFT & STIFT AG.**
**Brunnerstrasse 44-50**
**A-1231 Wien (AT)**

(72) Erfinder : **Barnerth, Heinz**
**Margaretengürtel 100/10/38**
**A-1050 Wien (AT)**

(74) Vertreter : **Rippel, Andreas, Dipl.-Ing.**
**Maxingstrasse 34**
**A-1130 Wien (AT)**

## Beschreibung

Die Erfindung bezieht sich auf eine Radführung für lenkbare und antriebsfähige Räder von Kraftfahrzeugen.

Es sind bereits eine Vielzahl derartiger Radführungen bekannt geworden, die jedoch, insbesondere wenn sie für schwere Nutsfahrzeuge geeignet sein sollen, verhältnismässig aufwendig sind. Auch beanspruchen die bekannten Radführungen veil Platz und verhindern dadurch eine weitgehende Ebenheit des Fahrzeuginnenbodens.

Aus der JP-A-62 120209 ist eine Radführung: gemäß dem Oberbegriff des Anspruchs 1 bekannt, bei der ein Radträger mittels Querlenkern sowie wenigstens einer Feder gegen den Wagenkasten abgestützt ist, wobei der Radträger an seiner Oberseite über einen zum Rad hin sich erstreckenden Querlenker und an seiner Unterseite über einen vom Rad weg sich erstreckenden Dreieckslenker mit dem Wagenkasten verbunden ist.

Durch eine derartige Konstruction wird zwar Platz nach innen zu gewonnen, jedoch ist eine solche Radführung für größere Belastungen, wie sie bei schweren Nutzfahrzeugen auftreten, nich geeignet.

Die Erfindung hat es sich zum Ziel gezetzt, eine Radführung zu schaffen, die einerseits einfach und damit preiswürdig ist, anderseits aber, trotz kleinstem Platzbedarf zur Fahrzeugmitte hin auch zur Aufnahme großer Kräfte geeignet ist. Erreicht wird dieses Ziel dadurch, daß der Radträger an seiner Oberseite über zwei von der Oberseite aus zum Rad hin sich erstreckende Querlenker und einen Längslenker mit dem Wagenkasten verbunden ist.

Bei einer zweckmässigen Ausführungsform der Erfindung greift der Längslenker an der dem Rad abgewandten Seite des Radträgers an diesem an. Dabei ist vorteilhaft das obere Ende des Radträgers in einer mit einer Platte verbundenen Büchse gelagert, wobei sich an der oberen Seite der Platte die vorzugsweise als Balg ausgebildete Feder abstützt und an der Unterseite ein Kranz angeordnet ist, an dem die Querlenker und der Längslenker angreifen.

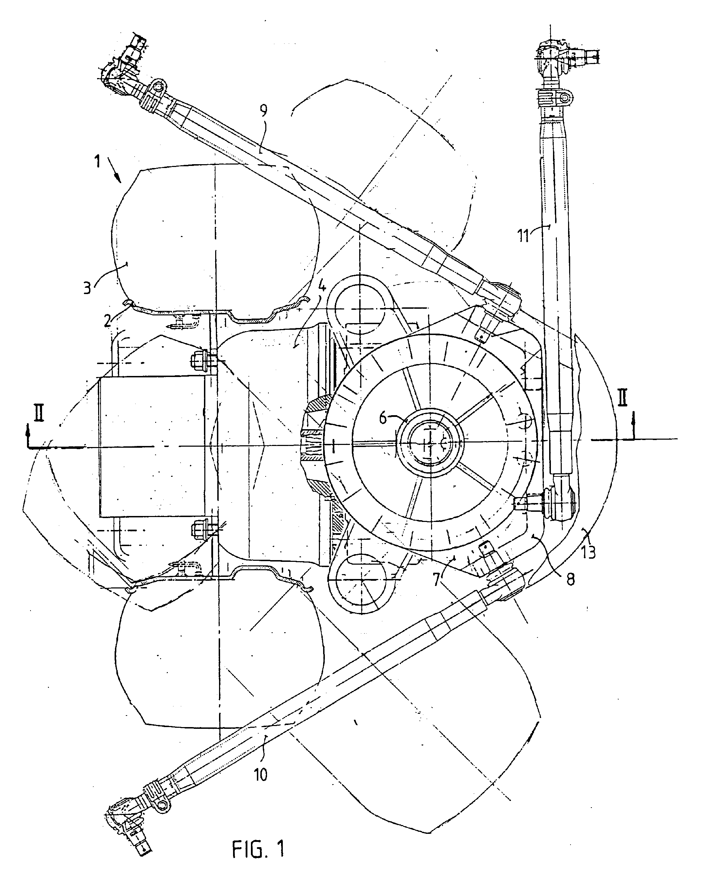

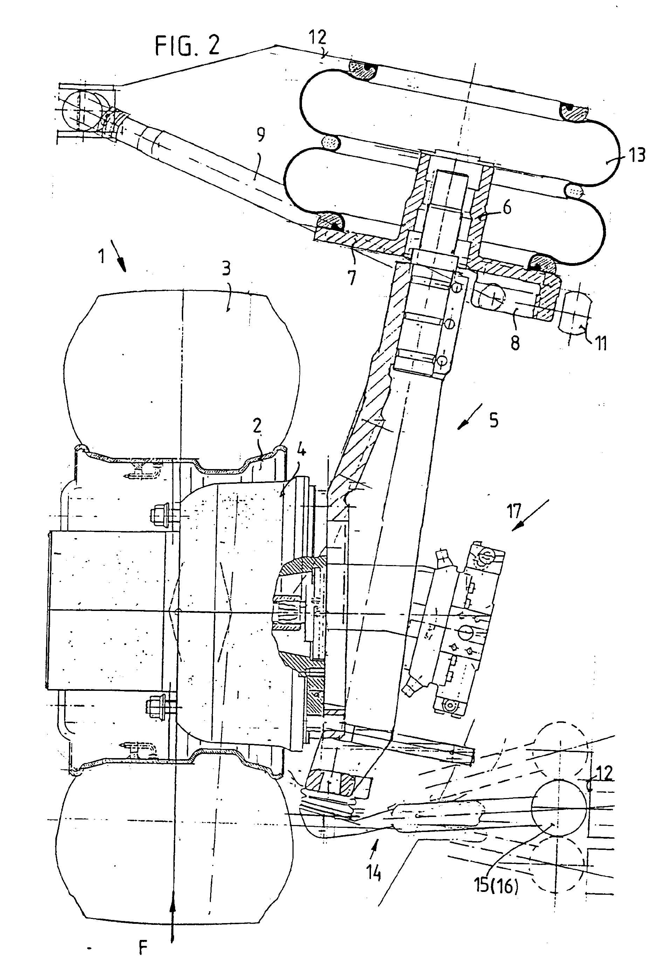

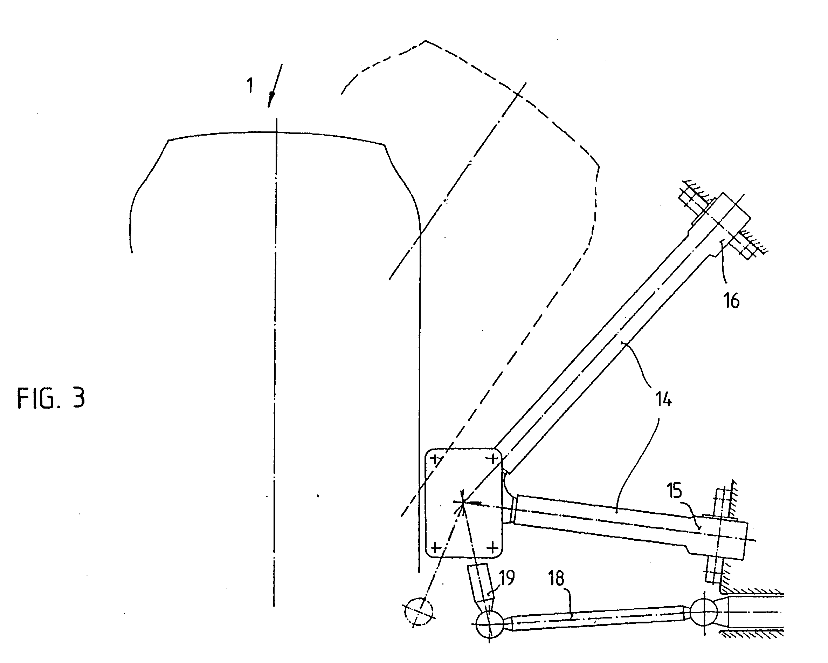

Nachstehend ist die Erfindung anhand eines in den Zeichnungen dargestellten Ausführungsbeispieles näher beschrieben, ohne jedoch auf dieses Beispiel beschränkt zu sein. Dabei zeigen Fig. 1 eine Draufsicht auf eine erfindungsgemässe Radführung, Fig. 2 einen Schnitt nach der Linie II-II in Fig. 1 und Fig. 3 schematisch den unteren Dreiecklenker.

Gemäß den Zeichnungen ist das Rad 1 eines Nutzfahrzeuges, das eine Felge 2 und einen Reifen 3 aufweist, über seine Trommel 4 mit einem Radträger 5 verbunden. Letzterer ist an seinem oberen Ende in einer Büchse 6 drehbar gelagert, an die eine Platte 7 mit einem Kranz 8 angesetzt ist. Am Kranz 8 greifen zwei Querlenker 9 und 10 sowie ein Längslenker 11 an. Die dem Kranz abgewendeten Enden dieser Lenker 8, 9 und 10 sind an dem in Fig. 2 angedeuteten Wagenkasten 12 angelenkt.

Gegen die Platte 7 liegt ein Balg 13 an, der an seiner anderen Seite gegen den Wagenkasten 12 abgestützt ist.

An der Unterseite des Radträgers 5 ist an diesem über ein Kugelgelenk ein Dreiecklenker 14 angelenkt, dessen beide Enden 15 bzw. 16 um am Wagenkasten 12 befestigte Achsen schwenkbar sind.

Der Antrieb des Rades 1 erfolgt im gezeichneten Beispiel über einen hydraulischen Motor 17.

In Fig. 1 sind außer der Mittelstellung des Rades 1 die beiden maximalen Lenkstellungen angedeutet; in Fig. 2 sind strichliert die beiden Endlagen des Dreiecklenkers 14 in seiner relativen Stellung zum Radträger 5 eingetragen.

In Fig. 3 ist der Dreiecklenker 14 mit seinen beiden Enden 15 und 16 unter Weglassung von Details schematisch dargestellt. Es ist dabei auch die Spurstange 18 und der Lenkhebel 19 eingezeichnet.

Eine auf das Rad 1 wirkende Kraft F wird daher über den Radträger 5 auf den Balg 13 und von diesem federnd auf den Wagenkasten 12 übertragen. Alle Lenker 9, 10 und 11 sowie 14 schwenken dabei um ihre am Wagenkasten 12 angeordneten Achsen und führen so das Rad 1 bzw. den Radträger 5. Dem Wageninneren zu, das ist in den Zeichnungen vom Rad 1 nach rechts, wird von der Radführung nur wenig Platz beansprucht, der Fahrzeugboden kann somit weitgehend eben gehalten werden. Die erfindungsgemässe Radführung ist daher insbesondere für Flughafenbusse geeignet, bei denen dies wegen des freien Durchganges der Fahrgäste besonders erwünscht ist.

Im Rahmen der Erfindung: gemäß den Ansprüchen sind zahlreiche Abänderungen möglich. So könnte der Antrieb statt über einen hydraulischen Motor auch über einen Elektromotor bzw. auch mechanisch über ein Kreuzgelenk erfolgen. Die Anlenkung der oberen Lenker 9, 10 und 11 wäre auch in anderer als in der gezeichneten Weise möglich. Wesentlich ist, daß sich die Lenker 9, 10: von der Oberseite des Radträgers aus zum Rad hin erstrecken. Statt des Balges 13 wäre auch die Anordnung einer anderen Feder möglich.

## Patentansprüche

1. Radführung für lenkbare und antriebsfähige Räder (1) von Kraftfahrzeugen, bei der ein Radträger (5) mittels Querlenkern (9, 14) sowie wenigstens einer Feder gegen den Wagenkasten (12) abgestützt ist, wobei der Radträger (5) an seiner Oberseite über einen: von dieser Oberseite aus zum Rad (1) hin sich erstreckenden Querlenker (9) und an seiner Unterseite über einen vom Rad weg sich erstreckenden Dreieckslenker (14) mit dem Wagenkasten (12) verbunden ist, **dadurch gekennzeichnet,** daß der Radträger (5) an seiner Oberseite über zwei von dieser Oberseite aus zum Rad (1) hin sich erstreckende Querlenker (9,10) und einen Längslenker (11) mit dem Wagenkasten (12) verbunden ist.

2. Radführung nach Anspruch 1, **dadurch gekennzeichnet,** daß der Längslenker (11) und der dem Rad (1) abgewandten Seite des Radträgers (5) an diesem angreift.

3. Radführung nach Anspruch 1 oder 2, **dadurch gekennzeichnet,** daß das ober Ende des Radträgers (5) in einer mit einer Platte (7) verbundenen Büchse (6) gelagert ist, wobei sich an der oberen Seite der Platte (7) die vorzugsweise als Balg (13) ausgebildete Feder abstützt und an der Unterseite ein Kranz (8) angeordnet ist, an dem die Querlenker (9,10) und der Längslenker (11) angreifen.

**Claims**

1. Wheel guiding device for steering and driving wheels (1) of motor vehicles, in which a wheel mounting (5) is linked to the body (12) of the car by means of control arms (9, 14) and at least one spring, with the top of the wheel mounting (5) being connected to the body (12) of the car by means of a control arm (9) extending from the top towards the wheel (1) and the bottom of the wheel mounting (5) being connected to the body (12) of the car by means of a steering triangle (140 extending from the wheel, **characterized in that** the top of the wheel mounting (5) is linked to the body (12) of the car by means of two control arms (9, 10), which extend from this top to the wheel (1), as well as one putt rod (11)

2. Wheel guiding device according to claim 1, **characterized in that** the pull rod (11) is attached to the wheel mounting (5) on the side located opposite the wheel (1).

3. Wheel guiding device according to claims 1 or 2, **characterized in that** the top end of the wheel mounting (5) rests in a bushing (6) to which a plate (7) is joined; with a spring, preferably a cushion-type pneumatic spring (13), resting against the upper surface of the plate (7) and the bottom of the plate (7) featuring a circular ring (8) which serves as a point of contact for the control arms (9, 10) and the putt rod (11).

**Revendications**

1. Dispositif de guidage de roues pour des roues (1) braquables qui servent à la commande de véhicules où un support de roue (5) s'appuie à la carrosserie (12) à l'aide des bras oscillants transversaux (9, 14) et au moins d'un ressort, et où la partie supérieure du support de roue (5) est attachée à la carrosserie (12) à l'aide d'un bras oscillant transversal (9) qui s'étendent de cette partie supérieure vers la roue (1) tandis que la partie inférieure est attachée à la carrosserie (12) à l'aide d'un levier triangulaire (14) s'étendant de la roue, **caractérisé en ce que** la partie supérieure du support de roue (5) est attaché à la carrosserie (12) par deux bras oscillants transversaux (9, 10) et un bras oscillant longitudinal (11) s'étendant de cette partie supérieure vers la roue (1).

2. Dispositif de guidage de roues selon revendication 1, **caractérisé en ce que** le bras oscillant longitudinal (11) est attaché au côté du support de roue (5) opposé à la roue (1).

3. Dispositif de guidage de roues selon revendication 1, **caractérisé en ce que** la partie supérieure du support de roue (5) est logé dans un boîte (6) liée à une plaque (7), le ressort - de préférence en forme de coussin d'air pneumatique (13) - s'appuyant à la partie supérieure de la plaque (7) et avec une couronne (8), montée sur la partie inférieure du support de roue (5), sur laquelle sont attachés les bras oscillants transversaux (9, 10) et le bras oscillant longitudinal (11).

FIG. 1

FIG. 2

FIG. 3